# FASCICULE DE BREVET EUROPEEN

(11) **EP 2 950 421 B1**
(45) Date de publication et mention de la délivrance du brevet: **07.08.2019**
(21) Numéro de dépôt: 14290159.4
(22) Date de dépôt: 01.06.2014
(51) Int. Cl.: H02J 13/00, H05B 37/02, H05B 37/03

(54) **Dispositif de contrôle de paramètres électriques connecté au réseau internet**
Vorrichtung zur Kontrolle der elektrischen Parameter, die mit dem Internet verbunden ist
Device for monitoring electrical parameters connected to the internet

(43) Date de publication de la demande: 02.12.2015
(73) Titulaire: IFOTEC, 38500 Voiron (FR)
(72) Inventeur: Sillans, Christian, 38260 La Frette (FR); Billet, Gilles, 38500 Voiron (FR); Champeau, Stéphane, 38140 Apprieu (FR)
(74) Mandataire: Talbot, Alexandre

(56) Documents cités:
- EP-A1- 1 865 756
- WO-A1-2011/037475
- WO-A1-2013/063669
- WO-A1-2014/054330
- WO-A2-03/034570
- GB-A- 2 403 357
- US-A1- 2002 009 975

## Description

### Domaine technique de l'invention

L'invention est relative à un dispositif de contrôle de paramètres électriques connecté au réseau internet. Plus précisément, le dispositif selon l'invention est destiné à réaliser le suivi des paramètres électriques d'un appareil électrique.

### État de la technique

La gestion des parcs d'équipements électriques publics tels que l'éclairage, les feux tricolores, les caméras de surveillance, ou les panneaux d'informations, est communément réalisée équipement par équipement. Cela représente un coût humain important puisque du personnel doit être envoyé sur place pour vérifier l'état de chaque installation. Le coût financier peut également être élevé si les équipements sont mal réglés et consomment plus que ce qu'ils devraient, par exemple pour un lampadaire qui ne s'éteint pas pendant la journée.

Par ailleurs, la gestion individuelle des équipements électriques peut engendrer le mécontentement des usagers, par exemple lorsqu'un appareil est défectueux et qu'un technicien n'est pas en mesure d'intervenir rapidement.

Les équipements électriques publics doivent être gérés de manière plus réactive pour limiter les coûts financiers, humains, et pour garantir la satisfaction des usagers.

Document WO2014/054330 décrit un appareil d'estimation de l'utilisation de plusieurs dispositifs électriques dans une maison.

### Objet de l'invention

Un objet de l'invention consiste en un dispositif de contrôle de paramètres électriques qui est connecté au réseau internet. Plus précisément, le dispositif comporte avantageusement :
- un système de mesure des grandeurs électriques caractéristiques d'un équipement électrique,
- un système de transmission des grandeurs caractéristiques mesurées vers le réseau internet,
- une alimentation électrique destinée à alimenter le système de mesure et le système de transmission en électricité.

Les grandeurs électriques caractéristiques mesurées peuvent avantageusement être choisies parmi la tension, l'intensité, le facteur de puissance, la puissance active, la puissance réactive, et les harmoniques du signal.

Pour transmettre les valeurs mesurées, le système de transmission peut par exemple être configuré pour une transmission par fibre optique, et/ou par ADSL, et/ou par émission radio-fréquences.

Par ailleurs, le dispositif de contrôle peut être utilisé pour surveiller les grandeurs caractéristiques de plusieurs équipements électriques simultanément. Il peut également servir de source d'alimentation électrique pour au moins un appareil extérieur.

Selon un mode de réalisation avantageux, le dispositif peut être équipé d'une cellule mémoire configurée pour stocker les valeurs mesurées par le système de mesure.

Le dispositif peut également être pourvu d'un système d'alerte configuré pour prévenir un utilisateur lorsque l'une des grandeurs électriques caractéristiques mesurées atteint une valeur seuil prédéterminée.

Enfin, selon un mode de réalisation particulier, le dispositif peut être équipé d'un système de géolocalisation ou par adresse réseau.

L'invention concerne également un système d'éclairage comportant un dispositif de contrôle doté des caractéristiques précitées.

L'invention concerne enfin le procédé de contrôle du fonctionnement d'un système d'éclairage comportant les étapes suivantes :
- fournir un système d'éclairage possédant les caractéristiques qui viennent d'être mentionnées,
- mesurer les grandeurs électriques caractéristiques du système d'éclairage,
- transmettre les valeurs mesurées à un serveur web via internet.

L'invention concerne encore un système de contrôle comportant une pluralité de dispositifs de contrôle tels que définis précédemment, dans lequel chaque dispositif est connecté à au moins un système d'éclairage et dans lequel chaque dispositif de contrôle est configuré pour mesurer la consommation de chaque système d'éclairage et la qualité du réseau

### Description sommaire des dessins

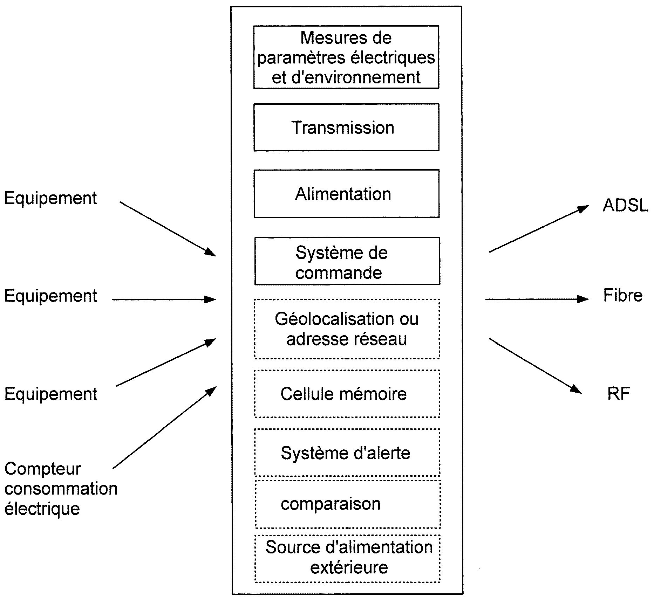

D'autres avantages et caractéristiques ressortiront plus clairement de la description qui va suivre de modes particuliers de réalisation de l'invention donnés à titre d'exemples non limitatifs et représentés sur le dessin annexé, illustrant schématiquement les différents modules pouvant être présents dans le dispositif.

### Description détaillée

Afin de permettre la gestion d'un parc d'équipements électriques publics de manière réactive, un dispositif de contrôle connecté au réseau internet est proposé.

Le dispositif de contrôle comporte avantageusement ou est connecté à une alimentation électrique destinée à fournir de l'électricité à un système de mesure de grandeurs électriques caractéristiques et à un système de transmission des données mesurées.

Le système de mesure est configuré pour mesurer au moins une grandeur électrique choisie parmi la tension, l'intensité, le facteur de puissance, la puissance active, la puissance réactive, et les harmoniques d'un signal aux bornes d'un équipement électrique. Il peut également être configuré pour mesurer les valeurs caractéristiques de plusieurs équipements électriques simultanément. La mesure des harmoniques est une mesure représentative de la qualité du réseau électrique et/ou de l'influence de l'équipement électrique sur le réseau électrique.

Les grandeurs électriques représentatives de l'équipement électrique sont recueillies par un système de transmission qui est configuré pour transférer les données mesurées à un serveur, par exemple un serveur web, via le réseau internet. Pour cela, le dispositif de contrôle peut être configuré pour transmettre des données par fibre optique et/ou par une connexion de type ADSL avec des fils de cuivre.

Il peut également être configuré pour transmettre des données par émission radio-fréquences. Cela peut être avantageux dans le cas où le dispositif équipe des appareils dans des zones non couvertes par la fibre optique ou par l'ADSL. On peut alors imaginer que les valeurs mesurées par le système de mesure soient transmises par émissions radio-fréquences à un relais connecté au réseau internet ou à un dispositif de contrôle équipé d'un récepteur radio-fréquences connecté au réseau internet.

Le serveur web peut comporter une interface de gestion d'un parc entier d'équipements électriques permettant par exemple de déclencher des mesures de grandeurs caractéristiques d'un équipement particulier, puis d'ajuster des paramètres afin d'optimiser le fonctionnement de cet équipement ou de détecter une défaillance. Cela permet de gérer le parc d'équipements de manière plus réactive.

De manière avantageuse, le dispositif de contrôle comporte également un dispositif de lecture des données mesurées par un compteur de consommation électrique appartenant un fournisseur d'électricité. De cette manière, le dispositif de contrôle est en mesure de collecter deux informations mesurées par deux outils différents ce qui permet de comparer deux méthodes de mesure éventuellement différentes ou de profiter des moyens de mesure du dispositif de contrôle qui sont plus précis.

Dans un mode de réalisation, le dispositif de contrôle comporte des moyens de comparaison configurés pour comparer les données mesurées par le système de mesure et les données mesurées par le compteur de consommation électrique ce qui permet de détecter facilement un comportement particulier de l'équipement électrique entraînant une consommation anormale ou une évolution du réseau électrique.

Le dispositif de contrôle peut être configuré pour comparer les données du système de mesure et du compteur de consommation électrique sur une période courte par exemple entre 5 minutes et 180 minutes ou encore sur une période longue, par exemple plusieurs mois ou plusieurs années. Il est possible de prévoir une comparaison sur un mois, sur deux ou trois mois. Il est encore possible de prévoir une comparaison sur une année ou sur au moins deux années.

En variante, le stockage des données et la comparaison des données sont réalisés par le serveur hors du dispositif de contrôle.

Le dispositif peut également être doté d'un système d'alerte apte à envoyer un signal d'alerte lorsque des valeurs mesurées par le système de mesure sortent d'une plage de valeurs prédéterminées. Le signal d'alerte peut être adressé à l'interface de gestion web, ou dirigé vers le téléphone d'une personne en astreinte de surveillance du parc d'équipement, de sorte qu'elle puisse intervenir rapidement pour solutionner le problème.

Afin de garantir la conservation des données, le dispositif de contrôle peut être doté d'une mémoire dont la capacité est adaptée au nombre d'appareils gérés par le dispositif, au nombre de valeurs relevées par le système de mesure, ainsi qu'à la fréquence d'échantillonnage. On peut prévoir que l'extraction des données de la mémoire puisse être réalisée à distance via une interface de gestion connectée au réseau internet, et/ou via une connexion filaire lorsqu'une opération de maintenance est réalisée sur place.

Pour faciliter les opérations de maintenance et de réglage des équipements électriques par des appareils extérieurs, on peut prévoir que le dispositif de contrôle soit utilisé en tant que source d'alimentation. Cela peut être également utile lorsque le parc d'équipements nécessite des aménagements supplémentaires ponctuels. Par exemple, lorsque le dispositif de contrôle est utilisé pour gérer un parc de lampadaires, des décorations de Noël peuvent être branchées sur le dispositif afin de décorer l'agglomération. Le dispositif de contrôle est configuré pour alimenter indépendamment plusieurs sorties d'alimentation.

De manière générale, le dispositif de contrôle possède un module de commande qui peut contrôler l'approvisionnement d'au moins une sortie électrique. Le dispositif peut être configuré pour fournir une tension prédéfinie (de type courant direct ou tension alternative) ou ne pas fournir d'alimentation. En variante, le dispositif peut être configuré pour avoir une sortie d'alimentation dont la tension et/ou le courant délivrés sont variables. Il est alors possible d'agir sur le dispositif de contrôle pour choisir les caractéristiques électriques de sortie.

Il est également possible de prévoir que le dispositif de contrôle possède une ou plusieurs sorties de transfert de données, par exemple une sortie de type série et/ou une sortie de type parallèle.

Le dispositif de contrôle peut être muni d'un module d'émission GPRS ou d'une autre interface radio.

L'adresse réseau du dispositif peut également servir de moyen de géolocalisation afin de savoir précisément quel est/sont les appareils contrôlés.

Lorsque le dispositif de contrôle est utilisé pour le contrôle de plusieurs appareils, il peut être envisagé de placer un module d'émission GPRS sur chaque appareil. De cette façon, l'adresse réseau du dispositif de contrôle permet de réduire le périmètre de localisation de l'appareil contrôlé, et le module GPRS permet sa localisation précise. A titre d'exemple, l'adresse réseau du dispositif de contrôle peut être réalisée par une adresse IP ou une adresse MAC. D'autres moyens de géolocalisation sont envisageables par exemple de type GPS ou Galileo ou des moyens terrestres de triangulation.

L'utilisation d'une adresse IP est particulièrement avantageuse, car l'adressage est réalisé au moins sur 32bits ce qui permet de fixer un code unique à chaque équipement électrique. Ce type d'adressage est plus efficace que l'adressage des dispositifs de contrôle de l'art antérieur car l'utilisateur sait rapidement si un ou plusieurs équipements électriques sont impactés et si un noeud de raccordement, par exemple une armoire d'alimentation, est à l'origine de la défaillance. L'utilisation de l'adresse IP permet de suivre facilement plusieurs milliers d'équipements électriques, par exemple 80000 équipements électriques ce qui n'est pas possible avec les techniques de l'art antérieur.

Selon un mode de réalisation particulier, on peut prévoir que le dispositif de contrôle serve de station météorologique. Dans ce cas, le dispositif peut comporter un système de mesure additionnel pouvant par exemple mesurer la pression atmosphérique, la température extérieure et le taux d'humidité ambiant. Le système de mesure additionnel peut alors être extérieur au dispositif mais être connecté à celui-ci par liaison filaire ou radio-fréquences.

Le système de mesure additionnel peut également être configuré pour mesurer ces grandeurs caractéristiques à l'intérieur même du dispositif afin de contrôler le bon fonctionnement de l'appareil, par exemple lorsqu'il est utilisé dans des zones très humides ou très chaudes.

Le dispositif de contrôle peut avantageusement être utilisé pour gérer tout type de parc d'équipements électriques publics, tels que des feux tricolores, des caméras de surveillance ou des panneaux d'informations. Il peut en particulier servir à la gestion de l'éclairage public, c'est-à-dire des lampadaires et de lieux remarquables (bâtiments, forteresses, falaises, arbres, etc.). L'utilisation du dispositif de contrôle permet alors l'allumage et l'extinction de l'éclairage public simultanément, et de manière adaptée en fonction des heures d'ensoleillement de la journée.

Les dispositifs de contrôle peuvent être configurés pour former des modules abonnés ce qui permet une gestion facilitée. Le dispositif de contrôle est considéré, du point de vue du fournisseur d'accès internet, comme un abonné standard. Dans cette configuration, le dispositif de contrôle peut être utilisé comme point d'accès au réseau internet pour un usage supplémentaire, par exemple la fourniture d'une ligne de communication configurée pour autorisée de la vidéo-projection avec caméra haute définition et/ou pour réaliser du contrôle d'accès.

Par exemple, pour contrôler un ensemble de systèmes d'éclairage publics, un dispositif de contrôle peut être associé à chaque éclairage ou à une armoire de commande qui alimente plusieurs éclairages. Dans ce cas de figure, un dispositif de contrôle mesure les grandeurs électriques de plusieurs équipements électriques qui sont désignés chacun par exemple par une adresse IP unique.

Le dispositif de contrôle peut réaliser les mesures périodiques de différentes grandeurs caractéristiques. Le choix des paramètres mesurés ainsi que la fréquence d'échantillonnage peuvent être prédéterminés via une interface de gestion d'un serveur web connecté au dispositif. Le choix peut également être réalisé par configuration manuelle du dispositif. Ces mesures sont alors transmises au serveur web via le réseau internet, et/ou stockée dans une mémoire.

Le dispositif de contrôle peut également être commandé à distance pour réaliser des mesures ponctuelles sur un ou plusieurs éclairages, par exemple lorsque des valeurs anormales sont mesurées. Le dispositif de contrôle peut aussi être utilisé pour réaliser des tests sur les éclairages préalablement à l'envoi d'une personne sur place.

Le dispositif permet donc de gérer les parcs d'équipements électriques de manière réactive et optimale afin de limiter les coûts financiers, énergétiques et humains mis en jeu.

Le dispositif de contrôle permet simplement de mesurer un grand nombre d'équipements électriques et de commander ces mêmes équipements électriques de manière aisée. Il est particulièrement avantageux d'utiliser une connexion par fibre optique pour réaliser la transmission montante et descendante des informations car cela permet une meilleure synchronisation des équipements électriques et une grande souplesse dans la communication des données.

Il est également avantageux d'utiliser le dispositif de contrôle comme moyen de communication supplémentaire car la connexion internet peut être utilisée pour d'autres usages, par exemple de la communication sur IP, sans que cela entraine un surcoût. Le dispositif de contrôle peut également être utilisé pour transmettre des informations depuis le serveur vers un organe d'affichage ou vers un autre outil capable de traiter l'information reçue.

Le dispositif de contrôle est configuré pour réaliser l'interface de suivi de la consommation électrique de l'équipement électrique ce qui permet à l'utilisateur ainsi qu'au fournisseur d'électricité de connaître la consommation électrique réelle.

L'utilisation d'un grand nombre de dispositifs de contrôle sous la forme d'un système de contrôle d'un réseau électrique permet de suivre en temps réel et/ou de manière périodique la consommation des équipements électriques. Dans la mesure où le dispositif de contrôle permet également de suivre des informations plus précises sur la qualité de la fourniture électrique, il est possible de suivre de manière précise la qualité du réseau électrique et éventuellement l'impact des équipements électrique sur le réseau électrique.

Cette particularité est très intéressante lorsque de nombreux dispositifs de contrôle sont installés ce qui autorise un suivi détaillé de la fourniture d'électricité sur un territoire étendu, par exemple un département, une région ou un état. L'envoie de toutes ces informations à un serveur permet de consolider les informations sur la consommation des équipements électriques et sur la qualité du réseau électrique. La lecture et l'analyse de ces informations sont ensuite plus aisées.

Les dispositifs de contrôle sont connectés à un serveur ce qui forme le système de contrôle configuré pour suivre la consommation électrique des équipements électriques disposés sur une étendue très importante. Le système de contrôle est configuré pour suivre la consommation électrique de nombreux équipements électrique ce qui permet de suivre une consommation électrique importante, par exemple de l'ordre d'un dizaine de millions de kWh. De tels niveaux de consommations sont inatteignables avec les dispositifs de l'art antérieur.

Le système de contrôle permet de suivre les évolutions de la qualité du réseau électrique à différents moments de la journée. Il est alors possible de faire le lien entre les relevés des consommations électriques et la qualité du réseau.

## Revendications

1. Dispositif de contrôle de paramètres électriques connecté au réseau internet comportant :
• un système de mesure configuré pour mesurer des grandeurs électriques caractéristiques d'équipements électriques d'un parc d'équipements électriques,
• un système de transmission des grandeurs électriques caractéristiques mesurées vers le réseau internet,
• une borne d'alimentation électrique destinée à alimenter le système de mesure et le système de transmission en électricité,
• des moyens de lecture de données présentes dans un compteur de consommation électrique des équipements électriques, les moyens de lecture de données étant configurés pour traiter les données présentes dans le compteur de consommation électrique,
**caractérisé en ce qu'**il comporte en outre des moyens de comparaison des données provenant du compteur de consommation électrique distinct et du système de mesure.

2. Dispositif de contrôle selon la revendication 1, dans lequel les grandeurs électriques caractéristiques mesurées sont choisies parmi la tension, l'intensité, le facteur de puissance, la puissance active, la puissance réactive, les harmoniques.

3. Dispositif de contrôle selon l'une quelconque des revendications 1 ou 2, dans lequel le système de transmission est configuré pour une transmission par fibre optique, et/ou par ADSL, et/ou par émission radio-fréquences.

4. Dispositif de contrôle selon l'une quelconque des revendications 1 à 3, dans lequel le système de mesure est apte à mesurer les grandeurs électriques caractéristiques d'au moins deux équipements électriques simu ltanément.

5. Dispositif de contrôle selon l'une quelconque des revendications 1 à 4, configuré pour être utilisé en tant que source d'alimentation électrique pour au moins un appareil extérieur.

6. Dispositif de contrôle selon l'une quelconque des revendications 1 à 5, comportant une cellule mémoire configurée pour stocker les valeurs mesurées par le système de mesure.

7. Dispositif de contrôle selon l'une quelconque des revendications 1 à 6, comportant un système d'alerte configuré pour alerter un utilisateur lorsque l'une des grandeurs électriques caractéristiques mesurées atteint une valeur seuil prédéterminée.

8. Dispositif de contrôle selon l'une quelconque des revendications 1 à 7, comportant un système de géolocalisation ou par adresse réseau.

9. Système d'éclairage comportant un dispositif de contrôle selon l'une quelconque des revendications 1 à 8.

10. Procédé de contrôle du fonctionnement d'un système d'éclairage comportant les étapes suivantes :
• fournir un système d'éclairage selon la revendication 9,
• mesurer les grandeurs électriques caractéristiques du système d'éclairage,
• transmettre les valeurs mesurées à un serveur web via internet.

11. Système de contrôle comportant une pluralité de dispositifs de contrôle selon l'une quelconque des revendications 1 à 8, dans lequel chaque dispositif de contrôle est connecté à au moins un système d'éclairage et en ce que chaque dispositif de contrôle est configuré pour mesurer la consommation de chaque système d'éclairage et la qualité du réseau.

## Patentansprüche

1. Vorrichtung zum Überprüfen elektrischer Parameter, wobei diese mit dem Internet verbunden ist und Folgendes aufweist:
• ein Messsystem, das dafür ausgelegt ist, elektrische Kenngrößen elektrischer Geräte einer Gesamtheit von elektrischen Geräten zu messen,
• ein System zum Übertragen der gemessenen elektrischen Kenngrößen an das Internet,
• einen Stromversorgungsanschluss, der dafür bestimmt ist, das Messsystem und das Übertragungssystem mit Strom zu versorgen,
• Mittel zum Auslesen von Daten, welche in einem Stromverbrauchszähler der elektrischen Geräte vorliegen, wobei die Datenauslesemittel dafür ausgelegt sind, die Daten zu verarbeiten, welche in dem Stromverbrauchszähler vorliegen,
**dadurch gekennzeichnet, dass** sie darüber hinaus Mittel zum Vergleichen der Daten umfasst, welche vom gesondert vorliegenden Stromverbrauchszähler und vom Messsystem stammen.

2. Überprüfungsvorrichtung nach Anspruch 1, wobei die gemessenen elektrischen Kenngrößen aus der Spannung, der Stromstärke, dem Leistungsfaktor, der Wirkleistung, der Blindleistung, den Oberschwingungen ausgewählt sind.

3. Überprüfungsvorrichtung nach einem beliebigen der Ansprüche 1 oder 2, wobei das Übertragungssystem für eine Übertragung mittels Glasfaser und/oder mittels DSL und/oder mittels Hochfrequenzemission ausgelegt ist.

4. Überprüfungsvorrichtung nach einem beliebigen der Ansprüche 1 bis 3, wobei das Messsystem dafür geeignet ist, die elektrischen Kenngrößen von mindestens zwei elektrischen Geräten gleichzeitig zu messen.

5. Überprüfungsvorrichtung nach einem beliebigen der Ansprüche 1 bis 4, wobei sie dafür ausgelegt ist, als Stromversorgungsquelle für mindestens ein Außengerät verwendet zu werden.

6. Überprüfungsvorrichtung nach einem beliebigen der Ansprüche 1 bis 5, wobei sie eine Speicherzelle aufweist, welche dafür ausgelegt ist, die Werte zu speichern, welche vom Messsystem gemessen wurden.

7. Überprüfungsvorrichtung nach einem beliebigen der Ansprüche 1 bis 6, wobei sie ein Warnsystem aufweist, das dafür ausgelegt ist, einen Anwender zu warnen, wenn eine der gemessenen elektrischen Kenngrößen einen vorbestimmten Schwellenwert erreicht.

8. Überprüfungsvorrichtung nach einem beliebigen der Ansprüche 1 bis 7, wobei sie ein System zur Geolokalisierung oder mittels Netzwerkadresse aufweist.

9. Beleuchtungssystem, das eine Überprüfungsvorrichtung nach einem beliebigen der Ansprüche 1 bis 8 aufweist.

10. Verfahren zur Überprüfung des Betriebs eines Beleuchtungssystems, wobei es die folgenden Schritte umfasst :
• Bereitstellen eines Beleuchtungssystems nach Anspruch 9,
• Messen der elektrischen Kenngrößen des Beleuchtungssystems,
• Übertragen der gemessenen Werte an einen Web-Server über das Internet.

11. Überprüfungssystem, das mehrere Überprüfungsvorrichtungen nach einem beliebigen der Ansprüche 1 bis 8 aufweist, wobei jede Überprüfungsvorrichtung mit mindestens einem Beleuchtungssystem verbunden ist, und wobei jede Überprüfungsvorrichtung dafür ausgelegt ist, den Verbrauch jedes Beleuchtungssystems sowie die Qualität des Netzwerks zu messen.

## Claims

1. Device for monitoring electrical parameters connected to the internet comprising:
• a measurement system configured to measure characteristic electrical quantities of electrical equipment units of a group of electrical equipment units,
• a transmission system for transmitting the measured characteristic electrical quantities to the internet,
• an electric power supply terminal designed to supply the measurement system and the transmission system with electricity,
• data reading means for reading data present in an electric power consumption meter of the electrical equipment units, the data reading means being configured to process the data present in the electric power consumption meter,
**characterised in that** it further comprises means for comparison of the data provided by the distinct electric power consumption meter and the measurement system.

2. Device for monitoring according to claim 1, wherein the measured characteristic electrical quantities are chosen from the voltage, current, power factor, active power, reactive power, and harmonics.

3. Device for monitoring according to either one of claims 1 or 2, wherein the transmission system is configured for transmission by optic fibre, and/or by ADSL, and/or by radiofrequency transmission.

4. Device for monitoring according to any one of claims 1 to 3, wherein the measurement system is designed to measure the characteristic electrical quantities of at least two electrical equipment units at the same time.

5. Device for monitoring according to any one of claims 1 to 4, configured to be used as electric power source for at least one external apparatus.

6. Device for monitoring according to any one of claims 1 to 5, comprising a memory cell configured to store the values measured by the measurement system.

7. Device for monitoring according to any one of claims 1 to 6, comprising a warning system configured to warn a user when one of the measured electrical characteristic quantities reaches a predefined threshold value.

8. Device for monitoring according to any one of claims 1 to 7, comprising a global positioning or network address system.

9. Lighting system comprising a device for monitoring according to any one of claims 1 to 8.

10. Method for monitoring the operation of a lighting system comprising the following steps:
• providing a lighting system according to claim 8,
• measuring the characteristic electrical quantities of the lighting system,
• transmitting the measured values to a web server via the Internet.

11. Monitoring system comprising a plurality of devices for monitoring according to any one of claims 1 to 8, wherein each device for monitoring is connected to at least one lighting system and in that each device for monitoring is configured to measure the consumption of each lighting system and the quality of the network.
